Europäisches Patentamt

European Patent Office

Office européen des brevets

(11) Publication number : **0 486 160 A2**

# (12) EUROPEAN PATENT APPLICATION

(21) Application number : **91309554.3**

(22) Date of filing : **17.10.91**

(51) Int. Cl.⁵ : **H04N 1/00, H04N 1/34**

(30) Priority : **22.10.90 US 600712**

(43) Date of publication of application :
**20.05.92 Bulletin 92/21**

(84) Designated Contracting States :
**AT BE CH DE DK ES FR GB GR IT LI LU NL SE**

(71) Applicant : **TOUCHFAX INFORMATION SYSTEMS, INC**
**15520 College Boulevard**
**Lenexa, Kansas 66219 (US)**

(72) Inventor : **Massey, John C.**
**10701 West 116th terrace**
**Overland Park, Kansas 66210 (US)**

(74) Representative : **Barlow, Roy James et al**
**J.A. KEMP & CO. 14, South Square, Gray's Inn**
**London WC1R 5LX (GB)**

(54) **Multi-purpose public facsimile transmission terminal.**

(57)    A multi-purpose public facsimile transmission terminal otherwise known as a public fax terminal, employs a stand alone kiosk with a touch activated computer display color monitor presentation, advising the user of the operational steps to take in the use of the machine. The user initiates operation by inserting a credit card in a card reader and following the instructions presented on the monitor. A scanner mounted in the kiosk reads a document to be faxed and stores the image in the memory of a computer. Faxed transmissions are received and sent over telephone lines by a fax modem in the computer. Copies of faxed documents are provided by a plain paper laser printer, which also has the capability of providing copies of any scanned documents or any documents in the computer memory. The computer memory presents video advertisements and has stored business and message forms which can be retrieved and used as desired. An interface connection open to the exterior of the terminal connects to a computer such as a laptop computer, provided by the user to download and fax information in the memory of the laptop computer. The terminal may also be used to retrieve documents from a remote data base system.

Fig. 1

## Field of the Invention

The present invention relates to facsimile transmission terminals and in particular to those terminals which use a means for payment and are public fax machines.

## Background of the Invention

Facsimile machines are in common use in homes and offices and in businesses throughout the United States and industrialized world. For business people away from their office, facsimile transmission services are available through hotel or small business service centers, which use an ordinary fax machine and charge for the service. These machines require an attendant to enter telephone numbers into the fax machine, service it when necessary, and to collect payment from the customer for the service. While these public fax services are available on an operator assisted basis in many office supply stores and copy service businesses, a need exists for a public fax service available to the user at a credit card activated, free standing kiosk which would be located in airports, hotels, motels, office buildings, court houses, post offices and convenience stores or any place frequented by the general public and at which it is inconvenient or impractical to station an attendant.

Public fax machines have heretofore been known to the public which use a conventional office fax machine in an enclosed housing coupled with a pay telephone and credit card reader. These machines were difficult to use because of the complexity of the instructions and procedures. Additionally, they use thermal paper and a document sheet feeder which has a tendency to jam. While these occurrences can be easily remedied in an office, the public user does not or should not have access to the fax machine and jams take the terminal out of service until an attendant arrives to service the machine.

## Objects of the Invention

The objects of the present invention are: to provide a public facsimile transmission terminal having a stand alone kiosk; to provide a public facsimile transmission terminal having a touch activated computer display color monitor presentation advising the user of the operational steps to take in the use of the terminal; to provide such a public facsimile transmission terminal which includes a credit card reader; to provide such a public facsimile transmission terminal which includes a flat bed scanner reading a document to be faxed and storing the image in the memory of a computer; to provide such a public facsimile transmission terminal which provides copies of faxed documents or copies of documents in general by a plain paper printer; to provide such a public facsimile transmission terminal which provides stored business and message forms; to provide such a public facsimile transmission terminal having an interface connection for a user's laptop computer download and fax information in the memory of the laptop computer; to provide such a terminal including a computer with memory to present video advertisements and stored business and message forms; to provide such a terminal which acts as part of a network to a remote information data bank; and to provide a public facsimile transmission terminal which is economical to manufacture, easy to use and suited for the intended purpose.

Other objects and advantages of this invention will become apparent from the following description taken in connection with the accompanying drawings, where are set forth, by way of illustration and example, certain embodiments of this invention.

## Brief Description of the Drawings

Fig. 1 is a frontal perspective view of a public facsimile transmission terminal embodying the present invention.

Fig. 2 is a diagrammatic view showing the placement of the components within the public facsimile transmission terminal.

Fig. 3 is a circuit diagram showing the layout of a timer within the public facsimile transmission terminal.

Fig. 4 is a diagrammatic view of the interior of the public facsimile transmission terminal.

Figs. 5 through 14 are schematic views of a flow chart of the terminal computer software program.

## Description of the Preferred Embodiment

As required, a detailed embodiment of the present invention is disclosed herein. However, it is to be understood that the disclosed embodiment is merely exemplary of the invention which may be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

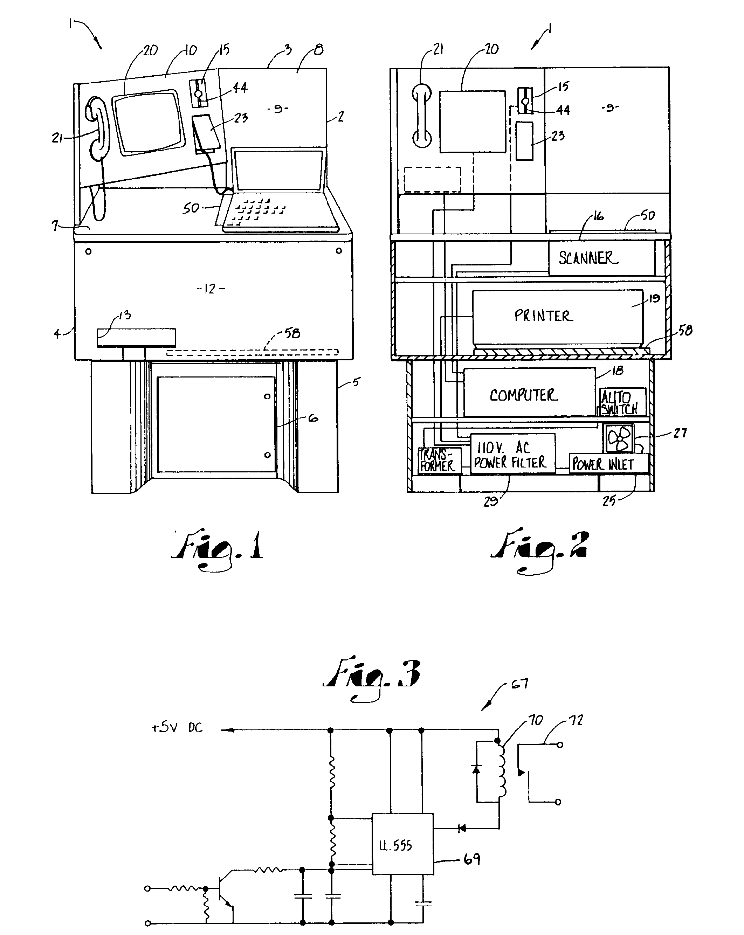

Referring to the drawings in more detail: the reference numeral 1, Fig. 1 refers to a public facsimile transmission terminal which, in the illustrated example, is contained in a stand alone kiosk 2, having a top 3, opposite sides 4 and 5, a bottom door 6 for access to the interior of the kiosk 2 and an upper table 7. A backboard 8 contains a space 9 for placement of advertising or user information and an angled front panel 10 contains operative elements of the terminal 1 as set forth below. The angled panel 10 is spaced upwardly from the table 7 a short distance so that the full extent of the table 7 can be utilized. In addition to the swing open door 6, the front panel 12 is also hinged for swinging access to the interior of the kiosk 2 and contains a chute 13 by which documents fed out by a printer located within the kiosk 2 as hereinafter described may be retrieved. Preferably, the kiosk 2 is formed of stainless steel or other durable material construction to withstand public use and abuse.

Within the kiosk 2 are the major components of the terminal 1 including a credit card reader 15 for enabling the function of the machine 1, a scanner 16 for scanning a document to be transmitted, a fax modem and data modem 17 for transmitting a scanned document and a computer 18 operably connected to the scanner 16 for storing and transmitting the image to be transmitted. The fax modem and data modem 17 is preferably positioned within the computer 18. A printer 19 is connected to the computer 18 for printing copies of incoming facsimile images and documents stored in the memory of the computer. A computer display screen 20 is mounted in the angled panel 10 so that it can be easily viewed by a user of the terminal 1. A telephone handset 21 is mounted on the angled panel 10 adjacent the computer display screen 20 for placing outgoing telephone calls and connecting the fax and data modem 17. A door 23 through the angled panel 10 conceals access to an interface connection into the computer 18.

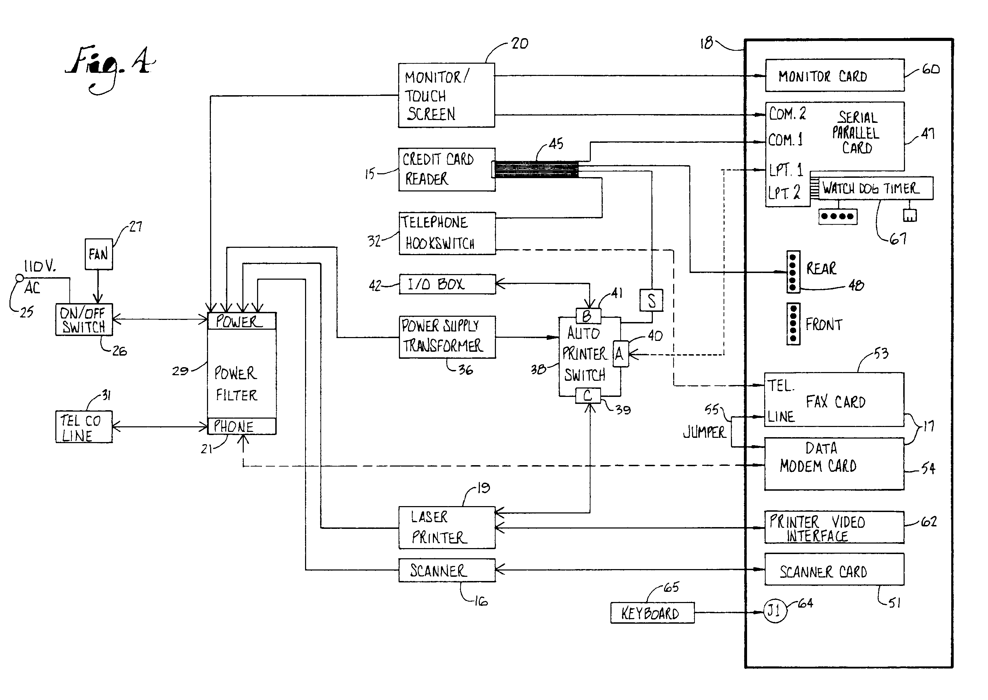

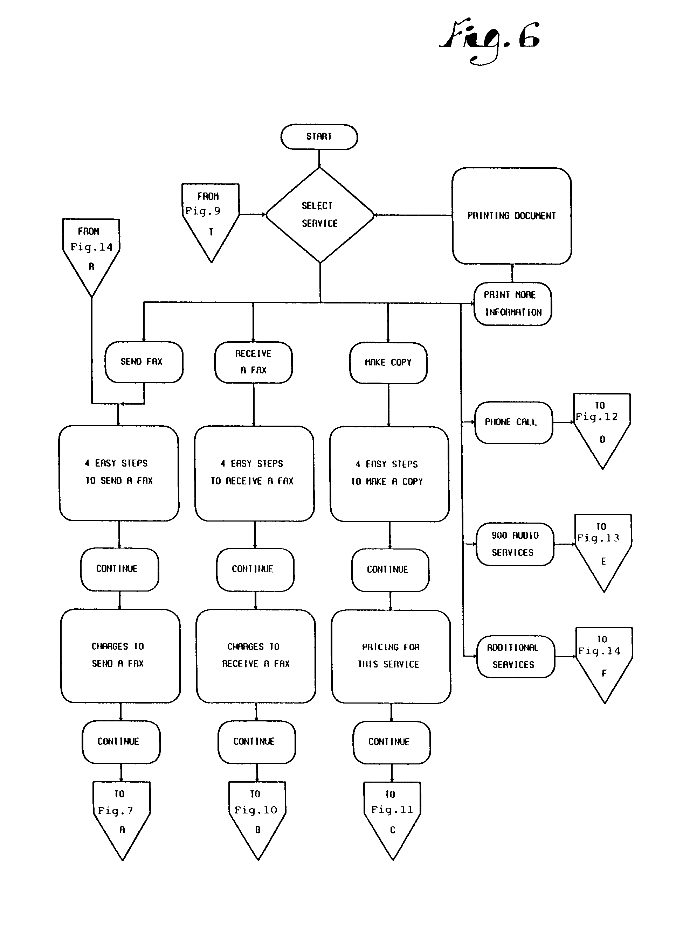

In the illustrated example, Figs. 2 and 4, the terminal 1 includes a power inlet 25 routed through an on-off switch 26. A fan 27 is wired to the on position of the switch 26 for continuous operation and cooling. 110 volt AC power from the inlet 25 is routed through a power filter 29 as a surge protection. An incoming telephone line 31 is routed through the power filter 29 also for surge protection and ultimately wired to the telephone handset 21. The telephone handset 21 is connected via a telephone hook switch 32 to the fax and data modem 17 as hereinafter described.

Connected to the power filter 29 are the scanner 16, computer 18, the laser printer 19, and a power supply transformer 36. The power supply transformer 36 powers a parallel port printer switch 38 having outputs 39 to the laser printer 19, output 40 to a computer interface, and an output 41 to a parallel port computer interface input/output box 42.

In the illustrated example, the credit card reader 15 includes a slot 44 for placement and retrieval of a credit card. A multiwire harness 45 carries signals from the credit card reader 15 to the telephone hook switch 32, commport 1 of a serial parallel card 47 in the computer 18, and to the parallel port printer switch 38. Power to the credit card reader 15 is received from a power supply connecter 48 in the computer 18.

The scanner 16 is preferably a flat bed scanner which provides a 300 DPI half-tone grey scale image and in the illustrated example, is manufactured by Panasonic, Model RS505 or Umax, Model U-32. The scanner 16 is accessible through a hinge mounted upwardly rotatable scanner door panel 50. A scanner card 51, Fig. 4, in the computer 18 provides interface between the scanner 16 and the computer 18.

The fax and data modem 17 is also mounted within the computer 18 and is connected to its motherboard. The fax and data modem 17 includes a fax card 51 which is preferably of 9600 BPS modem-MH coding. A data modem card 54 is preferably Hayes compatible and provides a suitable transmission rate such as 2,400 baud. A jumper 55 connects the fax card 51 to the data modem card 54.

The printer 19 is preferably an IBM or a Hewlett-Packard laser jet printer, such as am IBM 4019 printer or a Hewlett-Packard Laserjet II printer which provides a high quality plain paper print of either incoming fax messages or documents printed from computer memory. The preferred printer is a 300 DPI printer for a high quality print resolution. The printer 19 is mounted on a slide out tray 58 mounted within the kiosk 2 so that as the door 12 is swung open, the printer 19 may be slid outwardly for ease of servicing. The discharge chute 13 opening through the door 12 is positioned so that documents exiting the printer 19 fall into the chute 13 and can be easily retrieved by a user of the terminal 1.

The exemplary computer 18 uses an Intel 286 processor chip and operates at 12 megahertz, 200 watts. It includes a 40 megabyte hard disk and is connected to the computer display screen 20. The monitor is a 14 inch VGA color monitor and requires either a video VGA card of 256 kilobytes of memory or 512 kilobytes of memory. The monitor 20 has a touch screen overlay controller which allows image areas of the display monitor 20 to be touched and activated as control buttons. The computer program displays images of button controls on the monitor that relate to the touch screen control zones which activate the functions of the computer. Either a resistive type or a capacitative type touch screen controller may be used which connect to an interface controller card that controls the computer 18.

The computer 18 also contains a printer video interface card 62 and a connection port J1 64 for connection to a service keyboard 65. The keyboard 65 is provided by a serviceperson involved in the programming of the computer 18 during installation and continued maintenance of the terminal 1, and is not otherwise necessary to the continued operation of the terminal.

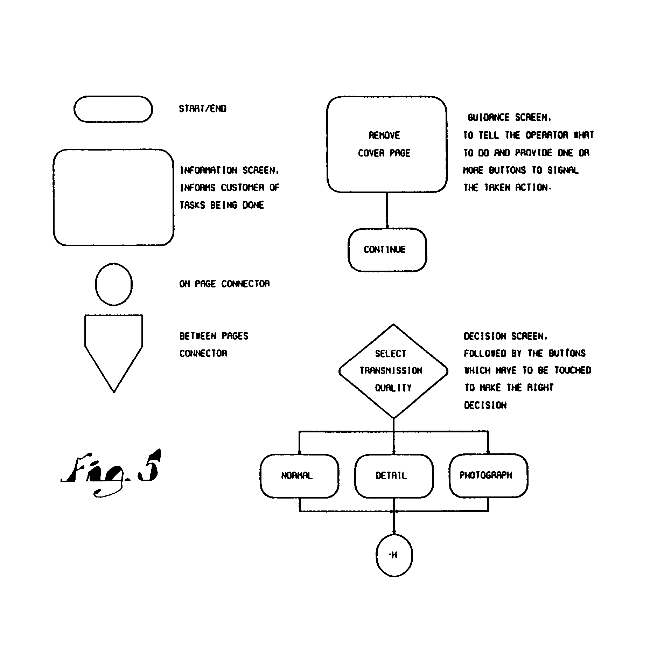

Referring to Fig. 3, a watchdog timer 67 in the computer 18 functions generally as a circuit that when the program of the terminal 1 is running properly, the timer circuit is constantly pulsed with a signal from Chip U.555, Numeral 69, that prevents a resistor and diode circuit within the timer configuration from building a charge above a selected voltage value. If a charge above the nominal value is accumulated, the charge exceeds a threshold point and a diode dumps a voltage across a transformer 70 that engages a relay 72 that initiates a hard reset of the entire computer 18. The circuit 67 allows for a resetting of the computer when a software lock up has occurred as a preventive device.

The computer program of the terminal 1 runs a promotional and instructional demonstration during non-use periods. The screen 20 continuously prompts a potential user to begin terminal use by touching the screen. Further instructions prompt the user to insert a credit card. The computer program then branches to a main program which displays self instructions on the screen and an initial main menu set of button options. Upon the activation of any button by touching the image on the screen, the program then branches to sub-routines that activate the function selected by the user. The program simultaneously displays the on-screen instructions and options necessary to move the user through the use sequence. The program automatically engages selected hardware and software routines such as dialing a number or scanning and printing a document to fulfill the function selected.

During the use of the terminal 1, video advertisements are displayed during wait periods and at the end of the session, a detailed receipt is printed, including on-line time.

In general, the computer operating program provides a charge by selection, such as fax services, a charge by time used, a charge by the number of pages sent or received, and a charge for class of telephone calls, whether local, long distance or international. A "send a fax" option presented by the computer permits the user to select the quality of the fax transmission, whether normal, fine or photographic, the size of the print, whether legal or letter size, or asks the terminal to print a cover page. The user is then asked to scan all pages and enters up to eight fax destinations. As the fax is being sent, the computer notifies the user that the system is dialing, that a connection has been made, and that the fax is being sent. The screen also displays the number of pages to send and the number of pages sent. If the transmission is not successful, the system will display that there was an error in transmission. The system will then ask the user to "try sending the fax again" or "cancel fax - no charge." If the user requests "Receive a Fax", the system will automatically set up to receive a fax.

If the sender calls at that time, the fax will be received. The user will also be allowed to make a call and tell the sending party to send the fax to the location's phone number. All faxes are printed to the laser printer and scaled to 8-1/2 X 11 inch paper.

If the user requests "Make a Phone Call", the user will be allowed to dial using an on-screen keypad. The user is able to change the number before the system dials. Once the number is dialed, the user is able to produce a dial tone message format signal by pressing the keypad. When finished, the user is asked if he or she would like to use another service, make another phone call or quit.

If the user requests "Make a Copy", he or she will be allowed either "Quality - Fine or Photograph" and "Size - 8 1/2 X 11 or 8-1/2 X 14." The user is then asked to scan each page and print up to ten copies. All copies are printed to the laser printer 19 and scaled to 8-1/2 X 11 inches. If the user selects "Laptop PC Connection", the system instructs the user to lift the door 23, connect the laptop cable to the parallel port 42 and print using HP LaserJet or appropriate emulation.

If the user selects "Fax Greeting Cards", the system will display a list of cards. When the user selects the card, the system will display the image and ask the user if he or she would like to have it printed.

If the user selects "Fax Business Forms", the system will display a list of forms. When the user selects the form, the system will display the image and ask the user if he or she would like to have it printed.

If the user selects "On-Screen Word Processing", the system will display a keyboard on the lower half of the screen and a blank page in the upper half. The user can type on the keyboard as he or she would use a typewriter and then print it when it is completed. The page is printed with one inch margins.

An "Electronic Library" function displays menus for accessing various remote information sources and service applications available via data communication lines. The program may be tailored to specific databases with programmed touch buttons and associated pathways.

When the user quits, the program prepares a bill indicating all charges, time used and credit card information. Charges are calculated based on the setup file. In addition, two files are created. The activity file accumulates and details each of the following items: perpetual clock time, perpetual clock data in 24 hour time, unit location, phone number fax sent to, phone number fax received from, number of pages transmitted, number of pages received, delivery status of each transaction, total amount billed to customer for transaction, major credit card provided for payment, full card account number, card expiration date. The billing file accumulates the account number, expiration date, total amount of transaction, current time and current date.

The program also includes a diagnostic routine. At a designated time, the program takes the terminal out of service and displays this status and the time left to be out of service on the screen. This designation is configured in a setup file.

The system tests each available component and reports any failures via modem to a designated monitoring location. The system tests the following components: display status, hard disk available space, printer status, scanner on-line, fax card to component level, paper supply remaining, toner supply remaining, and modem status. All failures are logged in a file called ALPRINT.

When the program completes the diagnostic testing, it sets itself to auto-answer a remote host computer for billing transfer. Once the connection is made, the system will ask for a password. If the password is correct, the system will hang up and call the host computer back.

The program includes a set up file in which the following information may be configured: location information, CSID information, billing information, send a Fax variables which include delayed sending time and retry times, and diagnostic options including time to shut down. This information is configured from a simple menu.

The program is preferably written in an MS-DOS operating environment and uses Turbo-Pascal, C, and Assembler languages.

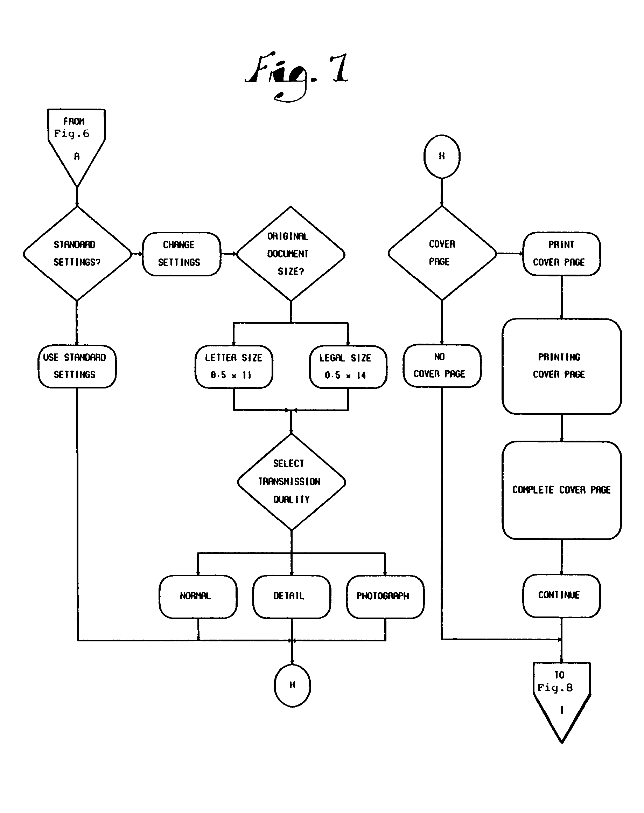

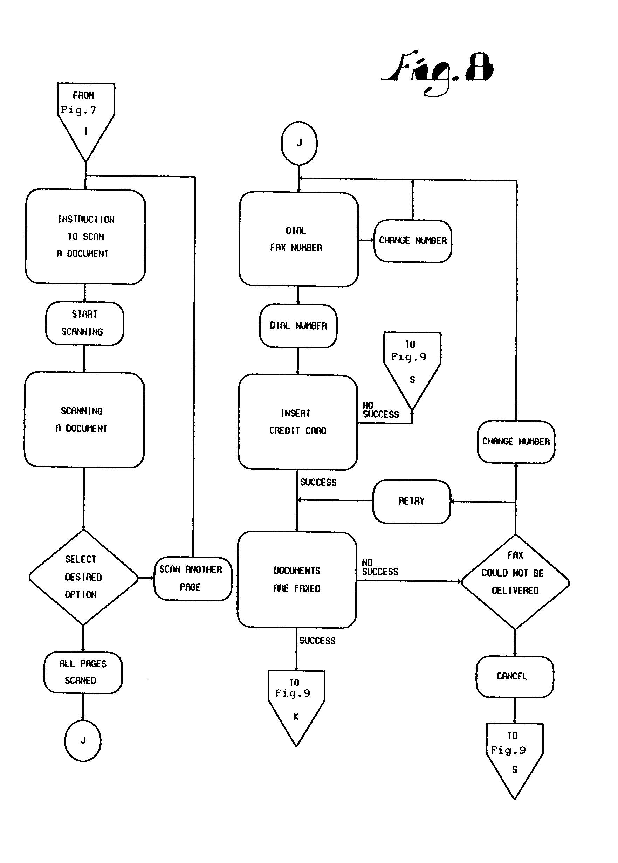

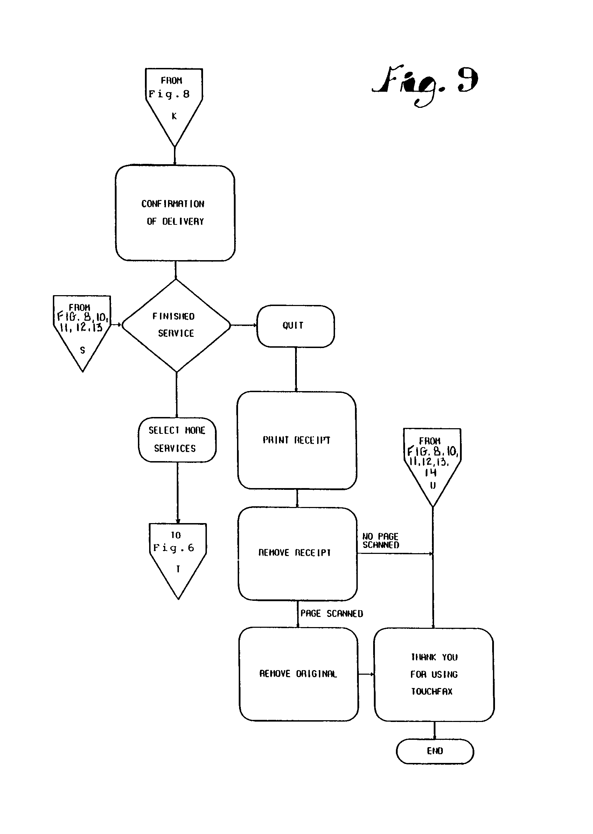

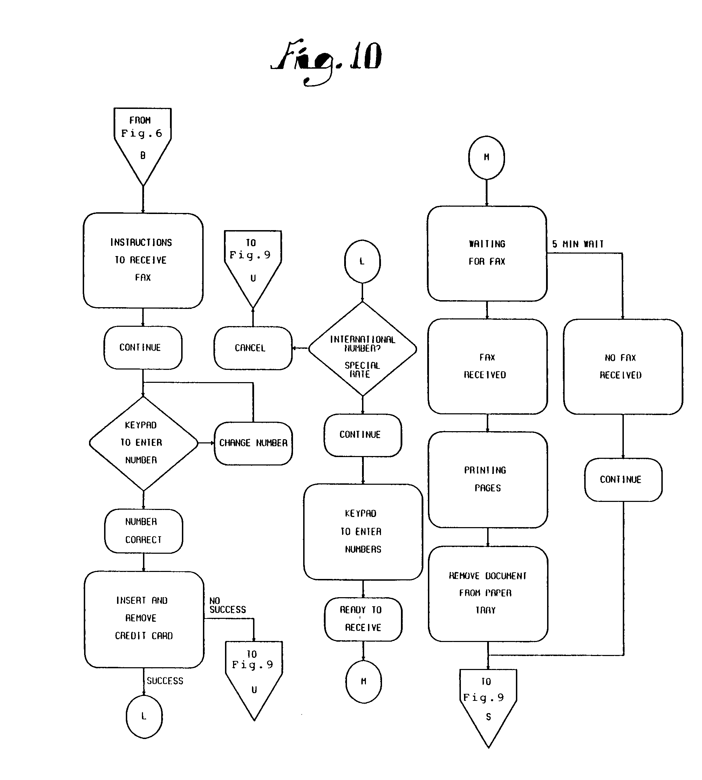

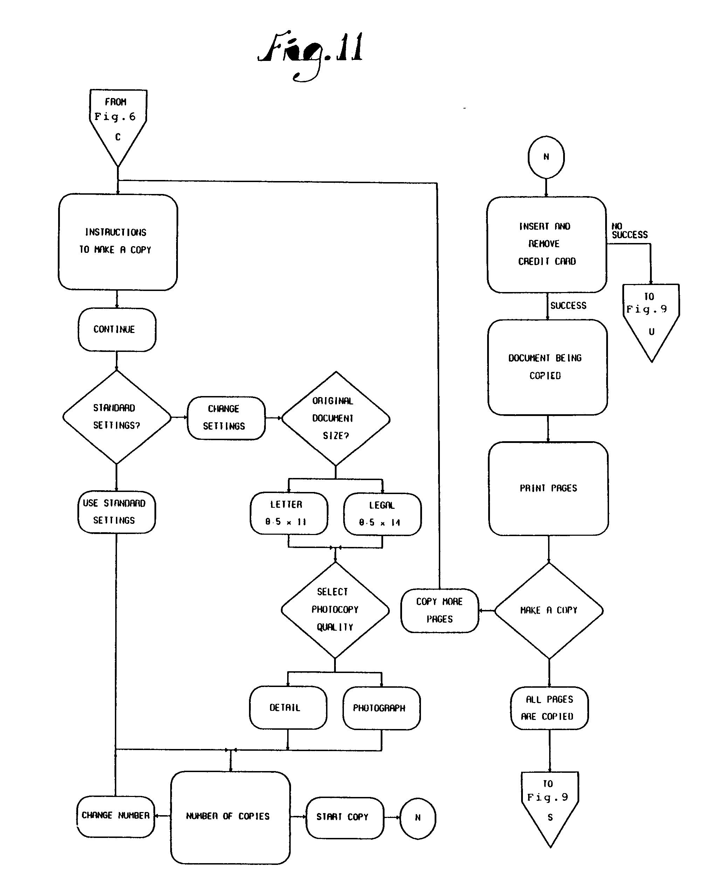

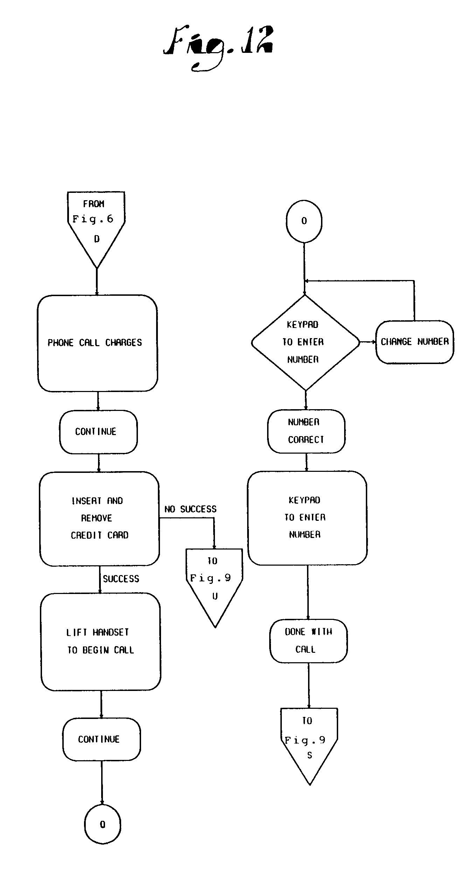

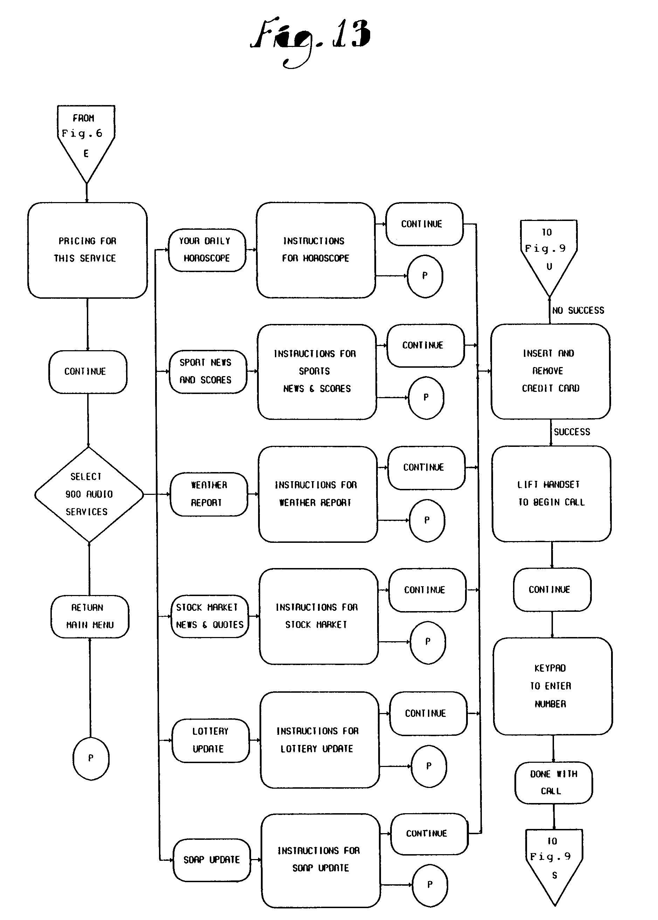

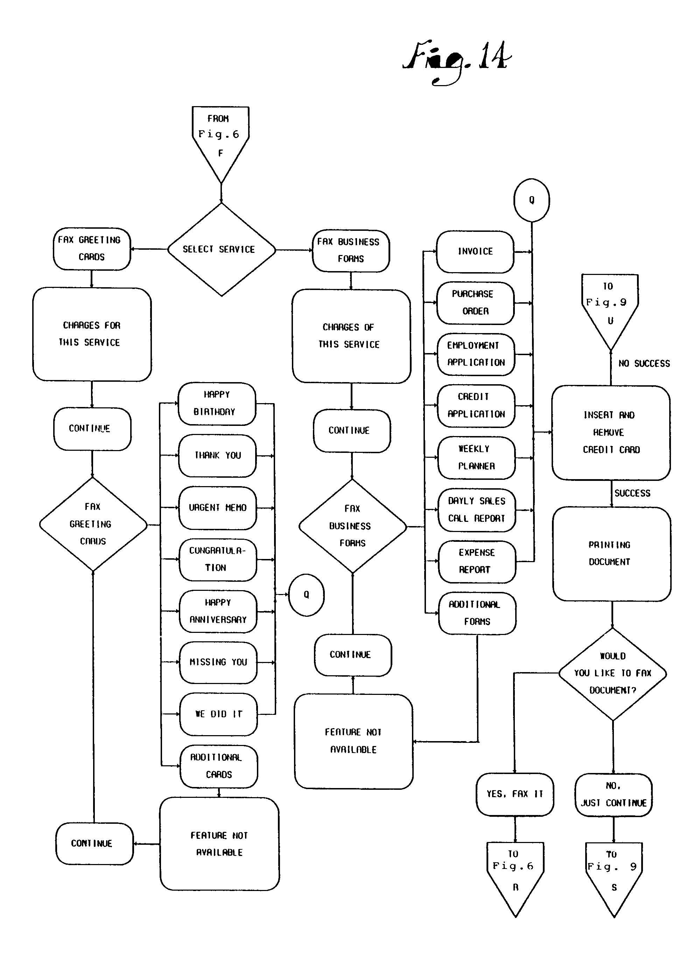

Referring in detail to Figs. 5-14, the software program flow charts, the terminal 1 runs a full motion demonstration program during all non-use periods. The screen prompts a potential user to begin using the machine by simply touching the screen. The flow chart, Fig. 6, begins with a start button at the top of the chart representing that starting point when the screen is touched and activated. The next screen that is shown, the "select service screen", is a main menu screen. The program flow branches down to the selections on the main menu which represent six different applications. Those are: "send a fax", "receive a fax", "make a copy", "phone call", "900 audio services" and "additional services." Upon selecting one of the main menu buttons, the program would step forward into a specific set of procedures necessary to complete that function. After pressing for example, "send a fax", the screen shows four easy steps to send a fax. These are examples of the four steps that would follow, giving the user a simple overview to assist his or her instruction.

The next screen in this sequence will have a "continue" button on it allowing the user to move forward in the program quickly. The next screen, Fig. 7, shows the charges relating to sending a fax, again, a "continue" button can move the user faster through the program. At the next screen, the user is asked to make a selection of one of two buttons. One button would indicate the standard settings and be shown as one color button, for example green, and a second button, such as a gold button, would represent change settings. If the user selects "change settings", the other screen appears, allowing the user to select the paper size. The options are letter size, 8-1/2 X 11, or a second button, representing legal size, 8-1/2 X 14 inches. After making a size selection, the screen changes and a selection of transmission quality would be displayed by three buttons, a first color button representing normal, a second color button representing fine detail, and another second color button representing photographs or half-tone images. Once a transmission quality selection is made, the screen changes to the next prompt. This prompt, Fig. 7, asks the user if he or she would like to print out a cover page or to not print a cover page. If the "print cover page" button is selected, a screen appears that gives the user information that the cover page is printing. Also at that time, a video advertisement is shown on the portion of the screen. The following screen would be shown that the cover page is completed and would give the user instructions to fill out the cover page and when finished, press a "continue" button.

The next screen, Fig. 8, after the "continue" button has been pressed, presents instructions to scan a document and includes a button image that would initiate or start scanning the document. The screen displays specific instructions, indicating to the user to lift the scanner door, place a page face down at the red corner, close the scanner door and start scanning the document. The screen then shows a progress bar showing the scanning of the document, 0 to 100%. At the end of the scanning of the document, an option is available for the user to scan another page or all pages are scanned. If "scan another page" is selected, the process of scanning a document is repeated as indicated. If "all pages scanned" has been pressed, another screen comes up indicating a number dial keypad and prompts the user to enter the recipient's fax phone number on the keypad. After the number is entered, there are two button options. If a mistake has been made, a button for changing the number appears or a button appears for dialing the number. If dial number is pressed, a screen prompting the user to insert his credit card at that time is presented. The card is inserted and if successful, the documents will then be faxed out. If the card is not successful, it will allow additional opportunities for the user to insert the card through a loop process.

When the faxed documents are dialed and sent out, if the documents are successfully transmitted, a screen will be shown that successful transmission was completed. If the documents were not successfully transmitted, an options screen appears indicating that the faxed documents cannot be delivered, allowing the user the option to retry, change number, delay, transmit or cancel the transmission. At the end of the attempt or completion of sending the fax, the user would get this confirmation of delivery. Referring to Fig. 9, after confirmation of delivery, the user views a screen that indicates that the service is finished and the user has the option of quitting at that point or selecting more services. If the "quit" button is selected, the terminal 1 will print a receipt. It will also indicate on the screen the progress of the receipt printing, while showing a video advertisement. When the receipt was completed, it prompts the user to remove the receipt from the paper tray and to remove the documents on the scanner. At the end of the session, the screen displays a message of appreciation and returns to the standard default mode for its non-use period.

Fig. 10 illustrates the option at the main menu to receive a fax. A screen will appear showing the four easy steps to receive a fax. The user is also given the option to press the "continue" button to continue on faster to the next screen, but displays the charges for receiving a fax. There also is a continue button where the user has the option to continue faster to the next screen which gives the instructions to receive a fax. On that screen is also a continue button that the user may press to continue faster to the next screen, that allows him or her to enter a number to notify the sending party of the fax. On that screen is a keypad where the user presses the number he or she desires to enter. The screen also displays two buttons, "change number" and "number correct". The user elects the option of changing the number. The user can reenter the number on the keypad or if the user chooses the option of "number correct", the program continues to the next screen where the user is instructed to insert and remove a credit card. If the credit card inserted is of the correct type and inserted properly, the program dials the sending party and enables the user to talk to the sender and tell him or her of the telephone number at the terminal 1 to which the sender should transmit a fax. Upon hang up and completion of the call, the screen displays "waiting to receive a fax" with a countdown timer. On this screen is a video advertisement in the upper 2/3 of the screen. In the lower portion, 1/3 portion of the screen has a remaining time countdown for automatic reception. The time starts at five minutes and counts down to zero. Another screen appears to indicate that the terminal 1 is receiving a fax and counts the number of pages received while receiving them. When the transmission is complete, it provides a notice that it is printing the pages of the fax received. When it has finished printing all the pages, the display continues to the next screen to instruct the user to remove the documents from the paper tray. If no fax is received during the five minute wait period, a message indicates that the fax has not been received and a "press the continue" button in instructed. The display shows the service is complete and the option is given to quit or select more services. If the user selects the quit option, the receipt is printed and an instruction issued to remove the receipt. The user is instructed to remove the original document from the scanner and a screen is then presented that provides an appreciative greeting and the display may continue.

If the user has elected to choose "Make a copy" from the main menu, a screen is presented that describes four easy steps to make a copy. This screen has a "continue" button that allows the user to go online faster than the normal time value of thirty seconds to the next screen. The next screen has pricing for this service on making a copy, which also has a "continue" button which allows the user to continue faster. The next screen gives the user instructions to make a copy and also includes a continue button. The next display prompts the user for "use standard settings" or "change settings". If the user elects to change settings, he or she is prompted for the original document size. If the original is letter size, the option is elected by pressing the "letter" button. The other option is "legal." After the user chooses the original document size, a prompt is presented to select photocopy quality. This quality can either be detail or photographic. After the user has completed changing settings or using the standard settings, a prompt is displayed to enter the number of copies desired for that one document page. After the choice of the number of copies, an instruction is given to press the "start copy" button. The next screen appears and instructs the user to insert and remove a credit card. On successful acceptance of the credit card, the unit starts the document copying process. The user is instructed that the document is being copied by the scanner and prints out the document through the printer. After the pages are printed, a prompt asks if the user would like to copy more pages. If the option of copying more pages is chosen, the program goes to the beginning of the loop to the screen which instructs on how to make a copy. Otherwise, if the user pressed "all pages are copied" the sequence goes to the "finish service" block.

If the user selects "phone call" from the main menu, a prompt appears with the phone call charges, including the continue button. If "continue" is pressed, the unit times out to the next screen to an instruction to insert and remove a credit card. Upon successful completion and acceptance of the credit card, the user is instructed to lift handset to begin the phone call. After pressing the "continue" button on a "lift handset to begin call", the user is prompted with a keypad to enter the phone number. When entering the number, an option is given of changing the number by entering "number correct", at which time another screen appears with a keypad without the option of changing the number or the "number is correct." When that keypad appears on the next screen, the unit automatically dials the number and the user is prompted with the button that states that the call is done. When the user presses that button, it continues to the "finish service" block.

If the user elects to choose a 900 telephone number audio service from the main menu, an instruction is given with the pricing for this service and the "continue" button appears. The next screen prompts the 900 audio service of choice. Examples of these 900 audio services are a daily horoscope, the latest sports news and scores, weather report for 25 national cities, stock market news and quotes, lottery updates or soap opera update. After selecting one of the examples, the user is given instructions for use of the 900 audio service with the continue button or the option to return to the main menu. If "continue" is selected, an instruction is given to insert and remove a credit card, and upon successful completion and acceptance of the credit card, instruction is given to "lift handset to begin call" and a prompt made to press the "continue" button. Upon "continue", the display changes to the keypad screen and automatically dials the 900 audio service number. On the keypad screen, the user is given the option of entering additional letters, such as the first three letters of a zodiac sign. After the user has finished this service, he or she is prompted with the button labeled "Done with phone call." Upon pressing that button, the display continues with the "finish service" option. Of course, the main menu may be modified to present different functions.

If the user elects to use additional services from the main menu, the display continues to another menu that may have various services depending upon programming entered by the terminal supplier. These additional services include greetings and business forms. For example, the user is prompted to select a service providing faxed greeting cards or faxed business forms. After selection of one of the services, in this example, faxed greeting cards, the user is shown charges for this service with a continue button displayed. Upon pressing the "continue" button, the program displays various greeting cards for selection, including, for example, "Happy Birthday", "Thank you", "Urgent Memo", "Congratulations", "Happy Anniversary", "Missing You" or "We did it ! " The user may also elect the additional card option. Upon selection of the card that the user would like to print out, instruction is given to remove the credit card. Upon successful completion of processing and acceptance of the credit card information, the document is printed and the user is prompted with a fax option. If the user selects "Yes, I want to fax the document", the display branches to "Send a fax". If the user elects "No, do not want to fax a document", a "finish service" option appears.

During the entire presentation of the software display sequence, the user has the option of electing one of the three main function buttons. The first of these three buttons, such as located on the bottom left hand side of the display, allows the terminal to be connected with a remote operator who provides additional information about a service or how to use the unit. A center function button allows the user to back up through the program. A right function button allows the user to cancel a transaction without further charges. The program also includes a time out function whereby if the screen is not touched for sixty seconds, another screen will appear with information that the unit has been inactive for sixty seconds and thirty seconds remain in which to press a "continue" button.

If "continue" is selected, the program returns to the previous screen. If "continue" is not selected, the program makes a log of the transaction on the computer hard drive, does not print a receipt and returns to the a demonstration sequence on the display screen.

It is to be understood that while certain forms of this invention have been illustrated and described, the invention is not limited thereto, except insofar as such limitations are included in the following claims.

## Claims

1. A public facsimile transmission device comprising:
   a) reader means for reading a credit card and enabling the functions of said device;
   b) a touch activated display screen for initiating and controlling functions of said device;
   c) flat bed scanner means for scanning a document to be copied and to be transmitted;
   d) modem means for transmitting a scanned document; and
   e) power and control means for operation of said reader means, screen, scanner means and modem means.

2. A public facsimile transmission device comprising:
   a) a housing unit;
   b) a credit card reader for enabling the functions of said transmission device;
   c) a flat bed scanner for scanning a document to be transmitted;
   d) a fax modem for transmitting a scanned document;
   e) a computer operably connected to said scanner and said fax modem for storing and transmitting an image to be transmitted;
   f) a printer for printing copies of incoming facsimile images;
   g) a touch activated computer display screen for initiating and controlling functions of said device; and
   h) an interface connection open to the exterior of said housing unit for connection of a user supplied computer with said computer in said housing unit.

3. A public facsimile transmission device comprising:
   a) a stand alone kiosk;
   b) a credit card reader open to an exterior of said kiosk for receiving and reading a use's credit card and enabling the functions of said transmission device;
   c) a touch activated computer display screen comprising a color monitor and control buttons

associated therewith for initiating and controlling functions of said device;

d) a scanner mounted in said kiosk for scanning a document to be transmitted, said scanner communicating with a scanner panel opening to the exterior of said kiosk;

e) a computer mounted within said kiosk and operably connected to said credit card reader, said display screen and said scanner to receive and store a scanned document;

f) a fax modem within said kiosk connected to said computer and operably connected to a telephone line for transmitting a scanned document;

g) a plain paper laser printer connected to said computer for printing copies of incoming and outgoing facsimile images; and

h) an interface connection open to the exterior of said kiosk for connection of a user supplied computer with said computer is said kiosk.

4.  A public facsimile transmission and copy terminal comprising:

a) a housing unit;

b) a credit card reader for enabling the functions of said terminal;

c) a scanner for scanning a document to be transmitted;

d) a fax modem for transmitting a scamed document;

e) a computer operably connected to said scanner and said fax modem for storing and transmitting an image to be transmitted;

f) a printer for printing copies of incoming facsimile images; and

g) a touch activated computer monitor for initiating and controlling functions of said device.

5.  The terminal set forth in claim 4, wherein:

a) said computer contains a programmable memory for receiving facsimile images.

6.  The terminal set forth in claim 5 wherein:

a) said computer memory contains non-facsimile image documents for selection by a terminal user and print-out on said printer.

7.  The terminal set forth in claim 4, 5 or 6, wherein:

a) said printer is a plain paper printer and prints incoming facsimile images on plain paper.

8.  A public fax terminal and network comprising:

a) a housing unit;

b) a credit card reader enabling the functions of said terminal;

c) a scanner for scanning a document to be transmitted;

d) a fax and data modem for transmitting a scanned document;

e) a computer operably connected to said scanner and said fax and data modem for storing and transmitting an image to be transmitted;

f) a printer for printing copies of incoming fax images and for printing copies of documents from said scanner;

g) a touch activated overlay and monitor for touch initiating and controlling functions of said terminal;

h) said computer having a memory containing a selection of pre-stored documents for selection and use in said terminal; and

i) a remote computer accessible by said fax and data modem and having in its memory a selection of user services for said terminal.

9.  A method of utilizing a public computer terminal comprising the steps of:

a) touching a touch sensitive screen of a computer monitor;

b) selecting from among an array of options one or more of the following:

i) faxing a document; or

ii) receiving a faxed document and accomplishing the selection; and

c) paying for the use of said public computer terminal by the presentation of a credit card to a credit card reader.

10. The method set forth in Claim 9 wherein said array of options includes:

a) copying a document supplied by the user of said terminal, retrieving a business form from the memory of said computer, and retrieving information from a remote central data bank networked with said public computer terminal.

**Fig.1**

**Fig.2**

**Fig.3**

Fig. 4

START/END

INFORMATION SCREEN.
INFORMS CUSTOMER OF
TASKS BEING DONE

REMOVE
COVER PAGE

GUIDANCE SCREEN.
TO TELL THE OPERATOR WHAT
TO DO AND PROVIDE ONE OR
MORE BUTTONS TO SIGNAL
THE TAKEN ACTION.

CONTINUE

ON PAGE CONNECTOR

BETWEEN PAGES
CONNECTOR

SELECT
TRANSMISSION
QUALITY

DECISION SCREEN.
FOLLOWED BY THE BUTTONS
WHICH HAVE TO BE TOUCHED
TO MAKE THE RIGHT
DECISION

NORMAL

DETAIL

PHOTOGRAPH

·H

*Fig. 5*

*Fig.6*

# *Fig. 7*

Fig.8

**Fig. 9**

FROM
Fig.8
K

CONFIRMATION
OF DELIVERY

FROM
FIG. 8,10,
11,12,13
S

FINISHED
SERVICE

QUIT

SELECT MORE
SERVICES

PRINT RECEIPT

FROM
FIG. 8,10,
11,12,13.
14
U

10
Fig.6
T

REMOVE RECEIPT

NO PAGE
SCANNED

PAGE SCANNED

REMOVE ORIGINAL

THANK YOU
FOR USING
TOUCHFAX

END

# Fig. 10

# *Fig.11*

# Fig. 12

```
        ┌──────────┐                              ╭───╮
        │   FROM   │                              │ 0 │
        │  Fig.6   │                              ╰─┬─╯
        │    D     │                                │
        ╲──────────╱                                │
             │                                      ▼
             ▼                                  ╱╲      ╲
     ╭───────────────╮                        ╱  KEYPAD  ╲        ╭──────────────╮
     │               │                       ╱  TO ENTER   ╲─────▶│ CHANGE NUMBER │
     │ PHONE CALL    │                       ╲   NUMBER    ╱      ╰──────────────╯
     │ CHARGES       │                        ╲          ╱
     │               │                         ╲        ╱
     ╰───────────────╯                           ╲    ╱
             │                                    │
             ▼                                    ▼
       ╭─────────╮                          ╭──────────╮
       │ CONTINUE│                          │  NUMBER  │
       ╰─────────╯                          │  CORRECT │
             │                              ╰──────────╯
             ▼                                    │
     ╭───────────────╮                            ▼
     │  INSERT AND   │   NO SUCCESS        ╭──────────────╮
     │  REMOVE       │──────────┐          │   KEYPAD     │
     │  CREDIT CARD  │          │          │  TO ENTER    │
     ╰───────────────╯          │          │   NUMBER     │
             │                  ▼          ╰──────────────╯
             │ SUCCESS      ╲───────╱              │
             ▼              │  TO   │              ▼
     ╭───────────────╮      │ Fig.9 │        ╭──────────╮
     │  LIFT HANDSET │      │   U   │        │ DONE WITH│
     │  TO BEGIN CALL│      ╲───────╱        │   CALL   │
     ╰───────────────╯                       ╰──────────╯
             │                                     │
             ▼                                     ▼
       ╭─────────╮                          ╲───────╱
       │ CONTINUE│                          │  TO   │
       ╰─────────╯                          │ Fig.9 │
             │                              │   S   │
             ▼                              ╲───────╱
           ╭───╮
           │ 0 │
           ╰───╯
```

*Fig. 13*

```
                    ┌──────────┐
                    │  FROM    │
                    │  Fig.6   │
                    │    E     │
                    └────┬─────┘
                         │
   ┌──────────────┐      │       ┌─────────────┐    ┌───────────────┐    ┌──────────┐         ┌──────────┐
   │  PRICING FOR │      │       │ YOUR DAILY  │    │  INSTRUCTIONS │    │ CONTINUE │         │   TO     │
   │ THIS SERVICE │◄─────┘       │  HOROSCOPE  │────│  FOR HOROSCOPE│────┤          │         │  Fig.9   │
   └──────┬───────┘              └─────────────┘    │               │    └──────────┘         │   U      │
          │                                         │               │       ( P )             └────┬─────┘
          │                                         └───────────────┘                               │ NO SUCCESS
   ┌──────────────┐              ┌─────────────┐    ┌───────────────┐    ┌──────────┐         ┌───────────────┐
   │   CONTINUE   │              │ SPORT NEWS  │    │ INSTRUCTIONS  │    │ CONTINUE │         │  INSERT AND   │
   │              │              │ AND SCORES  │────│  FOR SPORTS   │────┤          │         │   REMOVE      │
   └──────┬───────┘              └─────────────┘    │  NEWS & SCORES│    └──────────┘         │  CREDIT CARD  │
          │                                         │               │       ( P )             └───────┬───────┘
          │                                         └───────────────┘                                 │ SUCCESS
   ┌──────────────┐              ┌─────────────┐    ┌───────────────┐    ┌──────────┐         ┌───────────────┐
   │   SELECT     │              │  WEATHER    │    │ INSTRUCTIONS  │    │ CONTINUE │         │  LIFT HANDSET │
   │  900 AUDIO   │──────────────│  REPORT     │────│  FOR          │────┤          │         │ TO BEGIN CALL │
   │  SERVICES    │              └─────────────┘    │ WEATHER REPORT│    └──────────┘         └───────┬───────┘
   └──────┬───────┘                                 │               │       ( P )                     │
          │                                         └───────────────┘                         ┌──────────────┐
   ┌──────────────┐              ┌─────────────┐    ┌───────────────┐    ┌──────────┐         │   CONTINUE   │
   │   RETURN     │              │STOCK MARKET │    │ INSTRUCTIONS  │    │ CONTINUE │         └──────┬───────┘
   │  MAIN MENU   │              │NEWS & QUOTES│────│  FOR          │────┤          │                │
   └──────┬───────┘              └─────────────┘    │ STOCK MARKET  │    └──────────┘         ┌──────────────┐
          │                                         │               │       ( P )            │   KEYPAD     │
        ( P )                                       └───────────────┘                         │  TO ENTER    │
                                 ┌─────────────┐    ┌───────────────┐    ┌──────────┐         │  NUMBER      │
                                 │  LOTTERY    │    │ INSTRUCTIONS  │    │ CONTINUE │         └──────┬───────┘
                                 │  UPDATE     │────│  FOR          │────┤          │                │
                                 └─────────────┘    │ LOTTERY UPDATE│    └──────────┘         ┌──────────────┐
                                                    │               │       ( P )            │  DONE WITH   │
                                                    └───────────────┘                        │   CALL       │
                                 ┌─────────────┐    ┌───────────────┐    ┌──────────┐         └──────┬───────┘
                                 │             │    │ INSTRUCTIONS  │    │ CONTINUE │         ┌──────────┐
                                 │ SOAP UPDATE │────│  FOR          │────┤          │         │   TO     │
                                 └─────────────┘    │ SOAP UPDATE   │    └──────────┘         │  Fig.9   │
                                                    │               │       ( P )            │   S      │
                                                    └───────────────┘                        └──────────┘
```

*Fig.14*